(19) **Europäisches Patentamt**

**European Patent Office**

**Office européen des brevets**

(11) **EP 1 150 487 A2**

(12) **EUROPEAN PATENT APPLICATION**

(43) Date of publication:
**31.10.2001 Bulletin 2001/44**

(51) Int Cl.⁷: **H04N 1/028**

(21) Application number: **01108051.2**

(22) Date of filing: **29.03.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **31.03.2000 JP 2000096198**
**16.03.2001 JP 2001076824**

(71) Applicant: **CANON KABUSHIKI KAISHA**
**Tokyo (JP)**

(72) Inventor: **Hanashi, Ryo**
**Ohta-ku, Tokyo (JP)**

(74) Representative:
**Leson, Thomas Johannes Alois, Dipl.-Ing.**
**Patentanwälte**
**Tiedtke-Bühling-Kinne & Partner,**
**Bavariaring 4**
**80336 München (DE)**

(54) **Image reading apparatus and image forming apparatus**

(57) An image reading apparatus and an image forming apparatus comprise an original resting device having a light transmitting portion for resting an original thereon; an illuminating device for illuminating the original rested on the light transmitting portion; and an image reading device for reading image information of the original by receiving reflection lights from the original illuminated by the illuminating device, wherein an amount of illumination in the light transmitting portion by the illuminating device is 2,000 lux or less.

FIG. 3

**Description**

BACKGROUND OF THE INVENTION

Field of the Invention

The present invention relates to an image reading apparatus for reading image information of an original and, for example, relates to an image reading apparatus such as a scanner, a facsimile machine. The present invention further relates to an image forming apparatus having an image reading apparatus such as a copying machine.

Related Background Art

Conventionally, an image forming apparatus provided with an image reading apparatus has a structure in which an image reading portion for reading image information of an original is provided under a transparent original glass stand (an original glass) on which an original is rested, and forms an image on a recording material such as recording paper in an image forming portion after converting image information of an original to an electric signal by this image reading portion. In such an image forming process, an original exposing device mounted on the image reading portion first exposes an original through the original glass stand, and reflected lights from the original exposed by this original exposing device is read by an image reading sensor that is also mounted on the image reading portion. In addition, the image forming apparatus has an open-closable pressure plate for blocking out outside lights incident on the original glass stand (via the original).

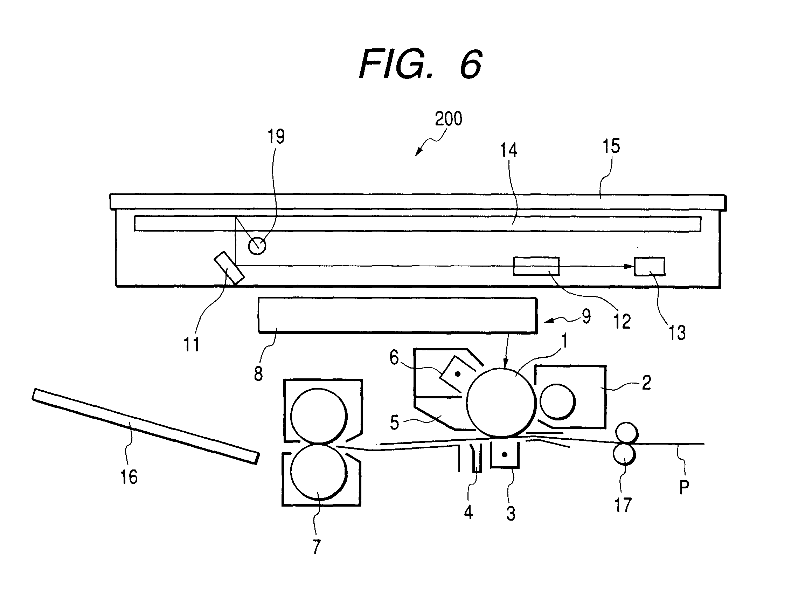

For example, Fig. 6 schematically shows an example of a conventional image forming apparatus.

As shown in Fig. 6, an optical system incorporated in an image forming apparatus 200 comprises a fluorescent light 10 as a light emitting source for lighting an original, a reflecting mirror 11 and a group of lenses 12 for condensing reflected lights from an original and causing the condensed light to be incident on a CCD 13, and the CCD 13 for converting luminance of reflected lights of an image condensed by the group of lenses 12 into an electric signal.

Original surface illuminance depends on a reading speed, sensitivity of an image reading sensor, an attenuation ratio of a quantity of light of a lens system and the like. In the apparatus of Fig. 6, an image reading speed is 90 mm/sec and original surface illuminance by the fluorescent light 10 is 10,000 lux.

On the other hand, in many cases, outside lights are usually in the order of 500 to 1,500 lux around an environment in which a copying machine is used.

Therefore, if an original image is read in a state in which an original pressure plate is open in such an apparatus, illumination lights irradiated on an original is not reflected to a region where an image is read by the image reading sensor and where an original is not rested, and outside lights of a light quantity lesser than the illumination lights are accidentally incident on the image reading sensor. Then, since that part of the region is determined as a "high density" part and an electrostatic latent image is formed on a photosensitive drum based on this information, an excessively large quantity of toner may be used for development (consumed) on the photosensitive drum.

Conventionally, in order to prevent the situation in which a non-original part is recognized as a high density part when a pressure plate is open and a large quantity of toner is consumed, there are a known apparatus and method. Examples of such an apparatus and a method are an apparatus which has a mechanism for detecting a size of an original rested on an original glass stand by an optical sensor and an inputting mechanism with which a user inputs a size of an original and which performs size blank exposure according to the detected or inputted size and a method thereof, or an apparatus and a method of having a readable area other than an original region recognized as "a white image" by image processing.

However, the original size detecting mechanism and the size blank exposure make an apparatus to be more complicated and expensive. In addition, the method by image processing has a problem in that a black part of an original is inadvertently processed as a white image, a problem of increased costs due to increase of capacity for an image memory, or a problem of decreased productivity due to increase of processing time, or the like.

SUMMARY OF THE INVENTION

It is an object of the present invention to provide an image forming apparatus that is capable of satisfactorily reading image information of an original without making the image forming apparatus itself larger in size and more complicated, and to provide an image forming apparatus using an image reading apparatus.

It is another object of the present invention to provide an image forming apparatus that is capable of controlling unnecessary consumption of toner.

Further objects of the present invention will be apparent by reading the following detailed descriptions.

BRIEF DESCRIPTION OF THE DRAWINGS

Fig. 1 is a side sectional view schematically showing an image forming apparatus mounted with an image reading apparatus in accordance with the present invention;
Fig. 2 is a sectional view of a low quantity of light optical system in accordance with the embodiment of the present invention;

Fig. 3 is a sectional view in the main scanning direction of the low quantity of light optical system in accordance with the embodiment of the present invention;

Figs. 4A, 4B and 4C are schematic illustrations showing a backside stain experiment that was performed with respect to the embodiment of the present invention;

Fig. 5 is a side sectional view schematically illustrating a copying machine in accordance with another embodiment of the present invention;

Fig. 6 is a side sectional view schematically illustrating an example of a conventional image forming apparatus;

Fig. 7 is a chart showing a relationship between original surface illuminance and output densities in the conventional art and of the first embodiment, respectively; and

Fig. 8 is a chart showing a relationship between original surface illuminance and output densities when the original surface illuminance is 500 to 1,000 lux.

DESCRIPTION OF THE PREFERRED EMBODIMENTS

An embodiment of an image forming apparatus (copying machine) mounted with an image reading apparatus having a low quantity of light optical system in accordance with the present invention will be described.

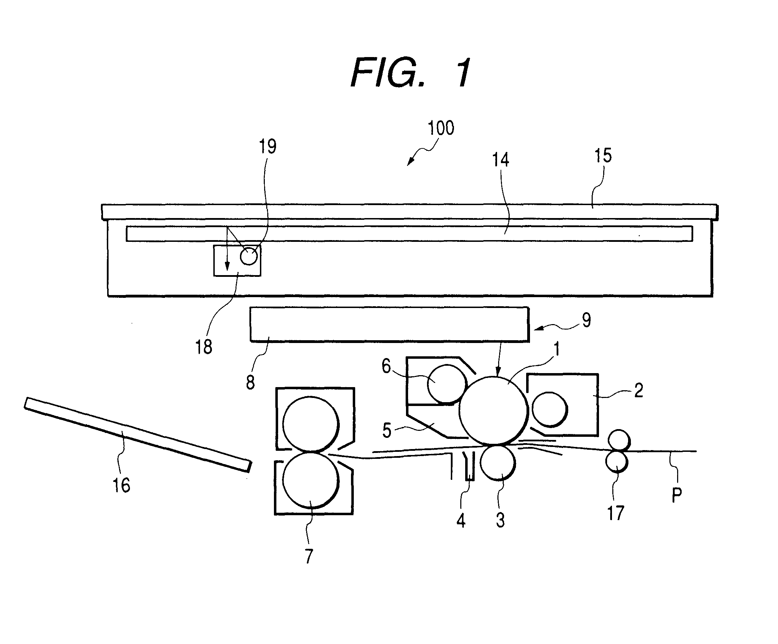

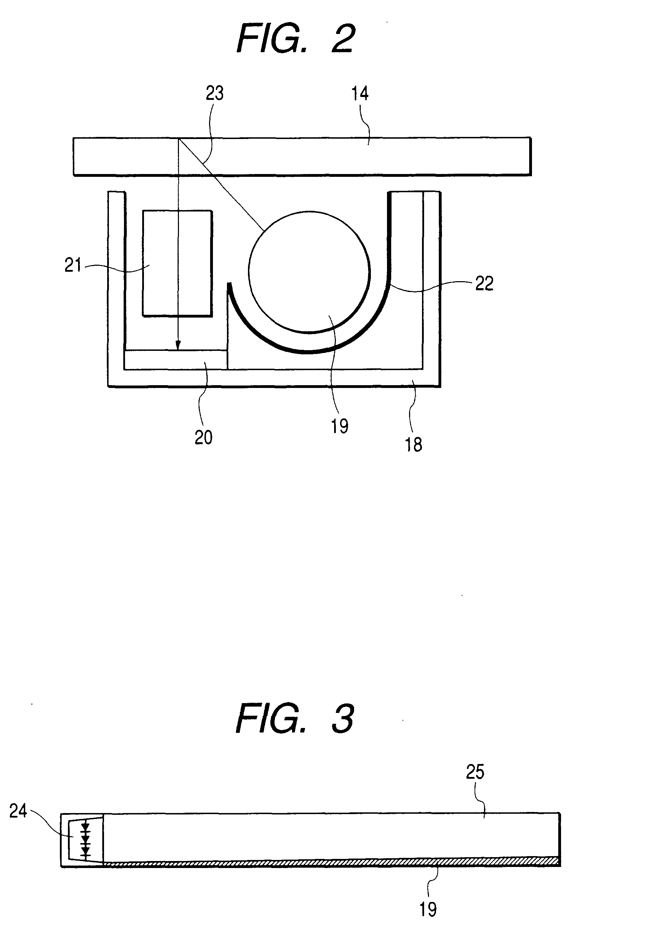

Fig. 1 is a side sectional view schematically illustrating a copying machine mounted with an image reading apparatus having a low quantity of light optical system in this embodiment. In addition, Fig. 2 shows a side sectional view of a low quantity of light optical unit (image reading unit) mounted on the copying machine. Moreover, Fig. 3 shows a front sectional view on which a light emitting portion incorporated in the low quantity of light optical unit is viewed from a main scanning direction.

As shown in Fig. 1, a copying machine 100 is provided with an original glass stand 14 (light transmitting portion) of a flat plate shape for resting an original thereon as original resting means, and an original pressure plate 15 as open-closable shielding means (the original pressure plate 15 can shield via an original) for preventing outside light from entering the original glass stand 14 in its upper most part.

The copying machine 100 is an image forming apparatus that is provided with an image reading unit for reading image information of an original (hereinafter referred to as the low quantity of light optical unit) 18 in its lower part, and is further provided with various members such as an LED 8 as exposing means (a light emitting source), a photosensitive drum 1, a charger 6, an exposure device 9 and a developing device 2 under the low quantity of light optical unit 18. The image forming apparatus forms a toner image based on image information of an original on a predetermined recording material (recording sheet). Further, the image forming apparatus is configured to be capable of reading various originals with a size (area) smaller than the original glass stand 14 by the optical unit 18. That is, the optical unit 18 is configured to be capable of reading various originals of sizes (areas) smaller than a region in which an original can be read (maximum readable region).

Then, as enlarged and shown in Fig. 2, the low quantity of light optical unit 18 incorporates a light emitting portion 19 as illuminating means in its inside, and is configured such that an illuminating light 23 irradiated from the light emitting portion 19 (in addition, the above-mentioned illumination light 23 may include an irradiated light emitted from the light emitting portion, reflected by a reflector 22 and reaching the original resting portion on the original glass stand 14 (this embodiment has such a configuration)) is irradiated to the original resting portion on the original glass stand 14 from its lower surface.

In the state in which the original pressure plate 15 is open, the image forming apparatus is configured such that image information of an original is read by the optical unit 18 one after another in a sub-scanning direction as the optical unit 18 itself moves relative to an original rested and stationary on the original glass stand 14. A moving speed of the optical unit 18 at the time of image reading is preferably 40 to 200 mm/sec considering photosensitive properties of a CCD and throughput of the image reading. In this embodiment, it is 80 mm/sec.

In addition, the image forming apparatus may have a configuration in which a well-known ADF (Auto Document Feeder) is mounted on the original pressure plate 15. In this case, image information of a plurality of pieces of originals can be sequentially read with the original pressure plate 15 closed. In addition, when an image is read, the optical unit 18 may have either the configuration in which the optical unit 18 makes reciprocating movement or a configuration in which the optical unit 18 stops at a predetermined position in the sub-scanning direction of the original resting portion while an original is moving (what is called flow reading).

Then, reflected lights from an original (having image information of the original) are condensed through a lens allay 21 onto a contact sensor (hereinafter referred to as the CS) 20 which acts as image reading means and in which sensors (hereinafter referred to as the CCD for converting luminance to an electric signal (photoelectrical conversion) are arranged in line). The image information is converted to an electric signal in the CS 20.

In addition, as shown in Fig. 3 as a front view, the light emitting portion 19 comprises LEDs 24 arranged in the non-image formable part in the main scanning direction and a light guiding tube 25 that propagates lights from the LEDs and equalizes quantity of light distribution in the longitudinal direction.

Five chips of the LEDs 24 as a light emitting source (illumination light source) are connected in series at the end part of the light guiding tube 25. Original surface illuminance of 2,000 lux is obtained by applying the PWM control to each LED. That is, illuminance by the LEDs 24 is approximately 2,000 lux on the surface of the original glass stand.

Resolution of the CS 20 is 600 dpi, and four chips of the CSs 20 are connected to form one line. Driving frequency is approximately 5 MHz.

Here, referring to Fig. 1 again, movement of the copying machine 100 in this embodiment will be described.

An image reading portion is a flat bed type, and reads image information of an original by the low quantity of light optical unit 18 moving in the sub-scanning direction with respect to the original set on the original glass stand 14. Analog data outputted from the CS 20 arranged in the low quantity of light optical unit 18 is applied image processing such as A/D conversion, shading correction, filter processing, luminance/density conversion and density input/output conversion, and is stored in an image memory for memory copying (page memory) as image data, or is transferred to an image forming portion (hereinafter referred to the printer portion) one after another via image memory (line memory) for processing image reading and image formation almost simultaneously.

In the printer portion for forming an image using the electrophotographic method, an electrostatic latent image corresponding to image information of an original is formed on the photosensitive drum 1 whose surface is uniformly charged by the charger 6 by exposing the photosensitive drum 1 using the exposure device 9 based on image data sent from the page memory or the line memory. The electrostatic latent image formed on the photosensitive drum is developed by the developing device 2 using developer (toner). Then, an image is formed by a predetermined electrophotographic image forming process. The process comprises the steps of transferring the toner image to a recording material P, which is conveyed to a transfer nip formed by the photosensitive drum and the transfer roller at a predetermined timing by a registration roller 17, by the transfer roller 3 as contacting-type transferring means, then separating the recording material P and fixing the image by a fixing device 7.

The transfer roller 3 has a function of giving conveying power to the recording material simultaneously with transferring the image on the recording material by contacting the photosensitive drum 1 and rotating following the rotation of the photosensitive drum 1.

The copying machine in this embodiment has a configuration in which a maximum sheet size to be supplied is A4 portrait feed, process speed is 75 mm/ sec, and image formation of 12 sheets/min in A4 portrait feed is possible.

In addition, if an original on which an image part (black part) occupies 5% of an entirely white paper of A4 size (hereinafter referred to as the standard original) is used in this machine, approximately 50 mg of toner is consumed for developing an electrostatic latent image on the photosensitive drum by the developing device 2.

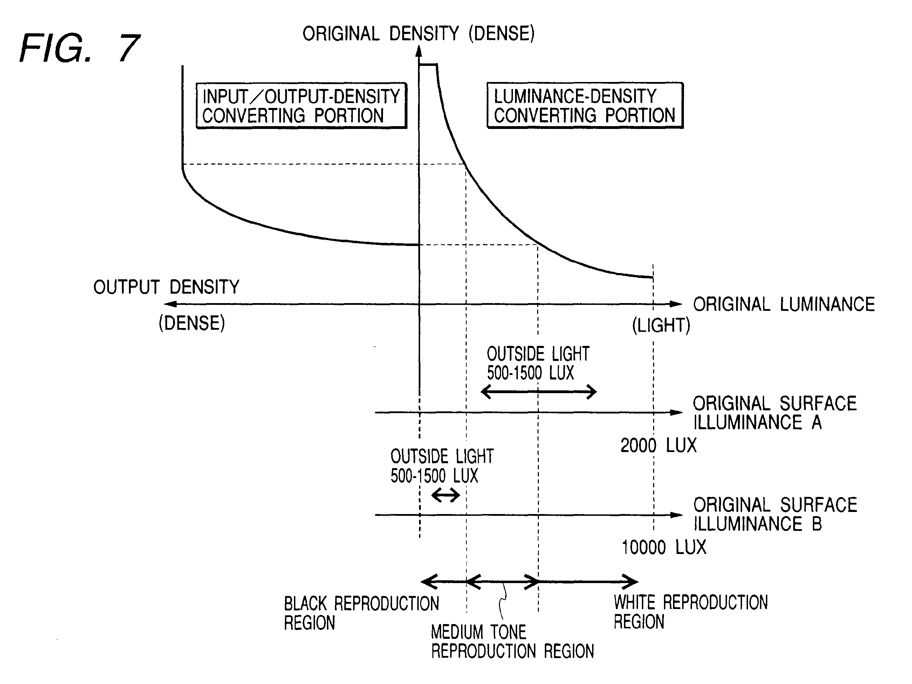

A relationship between illumination light intensity (illuminance) on an original surface by an illuminating device and an image density of an image outputted to a transfer material in the image forming portion in this embodiment will now be described with reference to Fig. 7.

The image reading portion reads quantity of reflected lights of an original by the CCD and processes it as an 8-bit luminance signal in an A/D conversion circuit.

Here, a minimum value of the reflected light intensity (reflection density) from an original that can be read by the CCD is a value adjusted by correcting a predetermined reflected light intensity (reflection density) from a standard density portion for shading correction, i.e., a predetermined white density, to a defined signal value. In this example of the apparatus, the reflection density of 0.1 is converted to the luminance signal of 255.

Moreover, a quantity of illumination light (illuminance) in the original resting portion by an original illuminating device corresponds to this density.

The luminance signal is converted to a density signal by the conversion indicated in a luminance-density converting portion in Fig. 7.

Moreover, the density signal is converted to an output target density signal by the conversion indicated in an input/output-density converting portion in Fig. 7.

In an ordinary copy output, reproducibility of characters is considered important and it is desirable that a white background is reproduced as a perfect white, and it is preferable that the input/output-density converting portion has an relationship as shown in Fig. 7.

Original surface illuminance in this example is approximately 2,000 lux, which corresponds to original surface illuminance A in Fig. 7.

In a conventional type copying machine, original surface illuminance is in the order of 10,000 lux, which corresponds to original surface illuminance B of Fig. 7.

Incidentally, in an ordinary office environment, an outside light illuminance around a copying machine by a fluorescent light, sunlight or the like is in the order of 500 to 1,500 lux. Assuming that an image is read while the pressure plate is open, the outside light of 500 to 1,500 lux is generally recognized as "a white image" in the case of original surface illuminance of 2,000 lux in this example as shown in Fig. 7.

On the other hand, in the case of original surface illuminance of 10,000 lux in the conventional type copying machine, the outside light is almost entirely recognized as "a black image".

Here, effects realized by the image forming apparatus (copying machine) in accordance with this embodiment as compared with the conventional image forming apparatus (copying machine) has been verified as describe below.

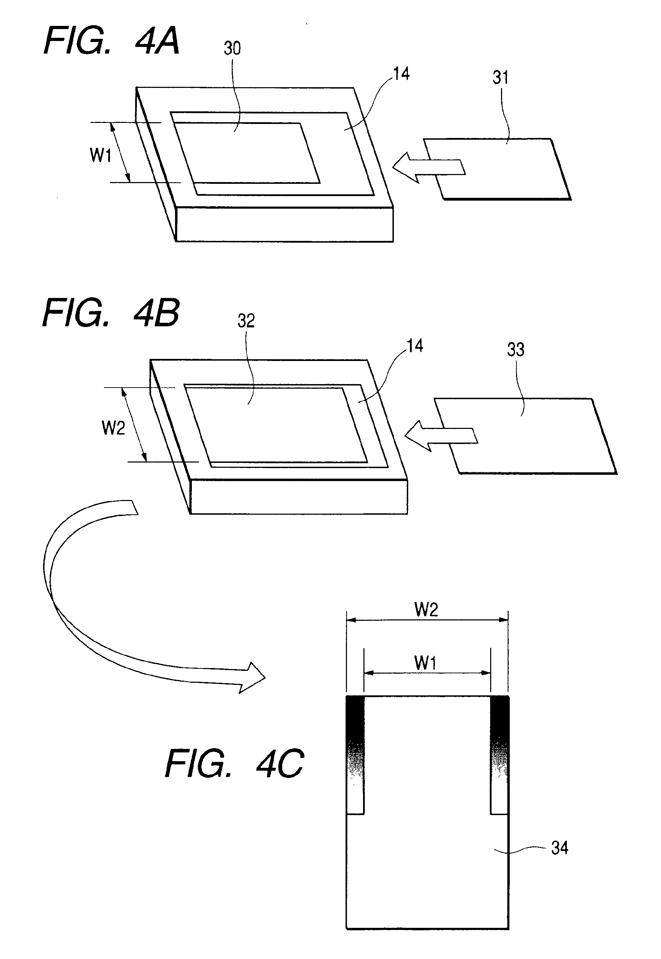

As shown in Fig. 4A, after having set an original 30 of A5 portrait size (width W1) on the original glass stand and after copying the original 30 on a transfer material 31 of A5 portrait size with the original pressure plate opened, an original 32 of A4 portrait size (width W2 > W1) is copied on a transfer material 33 of A4 portrait size with the pressure plate closed as shown in Fig. 4B. Here, a discharged transfer material is hereinafter referred to as a sample 34.

In the conventional type copying machine, since a non-original part was black due to the above-mentioned reasons, the back surface of the sample 34 was stained in black at an outer frame part outside the width W1 portion as shown in Fig. 4C.

On the other hand, in a copying machine according to this embodiment, since a non-original part was generally white, no stain was observed on a back surface of a sample.

In addition, in the case where, while copying at A4 size, the operation of opening the pressure plate every time after copying 500 pieces and then copying 10 pieces at A5 portrait size is repeated, when a character image of A4 size was copied after approximately 8,000 pieces had been copied, an image dispersion or a blank area caused by poor transfer of an image occurred in a part outside of the A5 portrait size width.

This is because toner was stuck to the transfer roller at a part outside the A5 size and the part is stained. That is, a resistance value of the transfer roller in the part was increased by an amount of the stuck toner, and transfer current became partially insufficient, thus, a blank area caused by poor transfer occurred.

On the other hand, when a similar operation was performed in the copying machine 100 of this embodiment, no problem occurred at the time when 150 thousand pieces had been copied.

As described above, in a copying machine in which the contact transfer method using a original glass stand of the flat bed type, a transfer roller or the like, if illuminance of original illumination lights is 2,000 lux or less on the surface of the original glass stand, a non-original part is generally recognized as a white image. Therefore, occurrence of back side stain due to stain of transferring means of a non-sheet-passing portion can be prevented without using a mechanism for detecting a width size of a transfer material, a size blank mechanism as in the conventional copying machine, or the like, and at the same time, occurrence of poor transferring after long-term use can be prevented and a lifetime of a transfer roller can be extended.

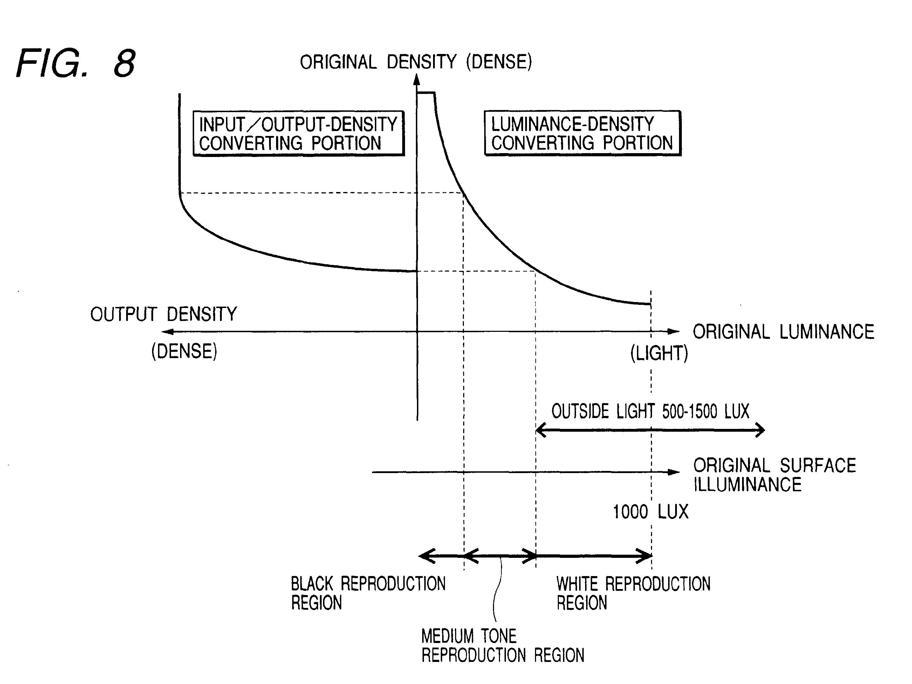

In addition, if illuminance of illumination lights on an original surface is preferably 1,000 lux or less, the aforementioned outside lights of 500 to 1,500 lux can always be recognized as "a white image" as shown in Fig. 8, and more certain effects can be attained. Further, a lower limit value of illuminance of illumination lights on an original surface is preferably 500 lux or more considering photosensitivity properties of the CCD and a moving speed of the optical unit 18 in the sub-scanning direction.

Further, illumination light intensity, i.e., illuminance, of illumination lights irradiated from the light emitting portion 19 as illumination means (as described above, the illumination lights may include irradiated lights from the light emitting portion 19 that are reflected by the reflector 22 and reach the original glass stand) at the original resting portion on the surface of the original glass stand 14 can be measured by a method comprising the steps of:

placing the optical unit 18 in a stationary state in which the optical unit 18 is in a predetermined position in the sub-scanning direction;
in the above state, installing an illuminometer (a digital illuminometer T-1M manufactured by Minolta Co., Ltd.) such that it closely contacts with a position on the surface of the original glass stand 14 where intensity of illumination lights from the light emitting portion 19 becomes the maximum in the sub-scanning direction; and
blocking outside lights by a blackout curtain or the like such that outside lights other than the illumination lights are not incident on the image reading apparatus including the illuminometer.

Illuminance in the present invention can be measured by starting measurement of illuminance after completing the setting for measurement as described above, and reading a measurement value from the illuminometer.

(Another Embodiment)

The present invention can be applied not only to an image forming apparatus that employs the contact transfer method using a transfer roller or the like as in a copying machine in accordance with the above-mentioned embodiment but also to an image forming apparatus that employs the non-contact transfer method using, for example, a corona charger.

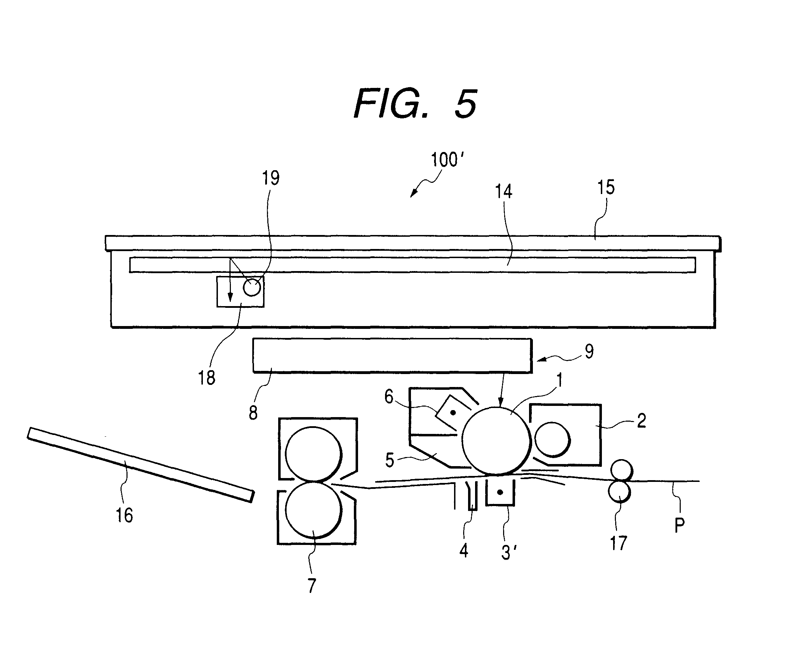

Fig. 5 is a side sectional view that schematically illustrating another embodiment in which the present invention is applied to a copying machine that uses a corona charger as transferring means. Further, a copying machine 100' shown in Fig. 5 has the same hardware configuration as the copying machine 100 (see Fig. 1) in accordance with the above-mentioned embodiment except that the copying machine 100' has a corona charger 3' instead of the transfer roller 3 (see Fig. 1). Therefore, identical reference numerals are affixed to each member having the equivalent structure and function, and repeated descriptions are omitted here.

In this embodiment, a toner consumption in the case in which a 5% original of A5 size was copied with a pressure plate opened was also measured for each copying machine as a basis for comparing the operational states in the copying machine 100' in accordance with this embodiment and, for example, the apparatus 200 that was described in Fig. 6.

In the conventional type copying machine that is described above, since the amount of toner to be consumed at an original part of A5 size is

$$(\text{standard original} / 2) = 25 \text{ mg/piece}$$

and the amount of toner to be consumed at a non-original part that is entirely black (100% original) is

$$(\text{standard original}) \times (100\%/5\%)/2 = 500 \text{ mg/piece},$$

total amount of toner to be consumed is 525 mg/piece.

On the other hand, in the copying machine 100' of this embodiment, since a non-original part is white (0% original) when the pressure plate is open, total amount of toner to be consumed is 25 mg/piece.

For example, if 100 pieces of copies are taken with the pressure plate open to copy a thick book, total amount of toner to be consumed in the conventional type copying machine is

$$52.5 \text{ mg/piece} \times 100 \text{ pieces} = 52.5 \text{ g}$$

whereas, in the copying machine 100' in accordance with this embodiment, total amount of toner to be consumed is

$$25 \text{ mg/piece} \times 100 \text{ pieces} = 2.5 \text{ g}$$

thus, 52.5 - 2.5 = 50 g is the difference of the amount of toner consumption.

When converting this into the number of standard originals,

$$50 \text{ g}/(50 \text{ mg/piece}) = 1,000 \text{ pieces}$$

which means that 1,000 more copies can be taken compared with the conventional copying machine.

In addition, when quantity of light of outside lights decreases, an original is determined to be medium tone (gray) rather than white with the quantity of light setting in this example, whereas, the conventional copying machine determines that an original is black even in such a case. Thus, since toner consumption is sufficiently reduced as compared with the conventional example, a favorable effect is attained.

That is, as in the above-mentioned another embodiment, the original size detection mechanism, the size blank mechanism or the like are unnecessary, a non-original part at the time when the original pressure plate is open is allowed to be processed as a low density region, and unnecessary toner consumption in that part is reduced without inducing recognition errors and increase of memory costs due to image processing and decrease of productivity due to increase of processing time as in the aforementioned embodiment, in other words, the apparatus configuration in which the transfer roller 3 is employed as transferring means. These effects can be attained even in the copying machine (image forming apparatus) employing the non-contact transfer method.

An optical system of an original reading portion to be mounted on an image forming apparatus is applied a configuration in which a quantity of lights reflected on an original surface is smaller than a quantity of outside lights, and the original reading portion recognizes a non-original part as a white image or a low density image at the time when a pressure plate is open.

As described above, according to the present invention, the original size detection mechanism, the size blank mechanism or the like are unnecessary, a non-original part at the time when the original pressure plate is open is allowed to be processed as a low density region without inducing recognition errors and increase of costs and decrease of productivity of image formation (throughput of image formation) due to image processing, and unnecessary toner consumption in that part is reduced.

In addition, in the image forming apparatus in which the contact transfer method using a transfer roller or the like, occurrence of back side stain due to the stain of transferring means of a non-sheet-passing portion can be prevented, thereby reducing the possibility of poor transferring after long-term use and a lifetime of a transfer roller can be extended.

An image reading apparatus and an image forming apparatus comprise an original resting device having a light transmitting portion for resting an original thereon; an illuminating device for illuminating the original rested on the light transmitting portion; and an image reading device for reading image information of the original by receiving reflection lights from the original illuminated by the illuminating device, wherein an amount of illumination in the light transmitting portion by the illuminating device is 2,000 lux or less.

## Claims

**1.** An image reading apparatus, comprising:

original resting means having a light transmitting portion for resting an original thereon;

illuminating means for illuminating the original rested on said light transmitting portion; and

image reading means for reading image information of the original by receiving reflection light from the original illuminated by said illuminating means,

wherein an amount of illumination in said light transmitting portion by said illuminating means is 2,000 lux or less.

2.  An image reading apparatus according to claim 1, wherein an amount of illumination in said light transmitting portion by said illuminating means is 1,000 lux or less.

3.  An image reading apparatus according to claim 1 or 2, wherein an amount of illumination in said light transmitting portion by said illuminating means is 500 lux or more.

4.  An image reading apparatus according to claim 1, further comprising shielding means for shielding said light transmitting portion, wherein said image reading means receives the reflection light in a state in which said light transmitting portion is not shielded by said shielding means.

5.  An image reading apparatus according to claim 1, wherein said image reading means reads an original that is smaller in size than a maximum readable area.

6.  An image reading apparatus according to claim 5, wherein said image reading means reads the image information by moving with respect to the original.

7.  An image reading apparatus according to claim 6, wherein said image reading means is movable while contacting a back surface of said light transmitting portion.

8.  An image forming apparatus, comprising:

    original resting means having a light transmitting portion for resting an original thereon;

    illuminating means for illuminating the original rested on said light transmitting portion;

    image reading means for reading image information of the original by receiving reflection light from the original illuminated by said illuminating means; and

    image forming means for forming an image on a recording material based on the image information of the original read by said image reading means,

    wherein an amount of illumination in said light transmitting portion by said illuminating means is 2,000 lux or less.

9.  An image forming apparatus according to claim 8, wherein an amount of illumination in said light transmitting portion by said illuminating means is 1,000 lux or less.

10. An image forming apparatus according to claim 8 or 9, wherein an amount of illumination in said light transmitting portion by said illuminating means is 500 lux or more.

11. An image forming apparatus according to claim 8, further comprising shielding means for shielding said light transmitting portion, wherein said image reading means receives the reflection light in a state in which said light transmitting portion is not shielded by said shielding means.

12. An image forming apparatus according to claim 8, wherein said image reading means reads an original that is smaller in size than a maximum readable area.

13. An image forming apparatus according to claim 12, wherein said image reading means reads the image information by moving with respect to the original.

14. An image forming apparatus according to claim 13, wherein said image reading means is movable while contacting a back surface of said light transmitting portion.

15. An image forming apparatus according to claim 8, wherein said image forming means comprises:

    an image bearing member on which developer image is formed based on the image information of the original read by said image reading means; and

    transferring means for transferring said developer image on said image bearing member to the recording material,

    wherein said transferring means is provided such that said transferring means contacts said image bearing member.

EP 1 150 487 A2

# FIG. 1

# FIG. 2

# FIG. 3

FIG. 4A

FIG. 4B

FIG. 4C

# FIG. 5

EP 1 150 487 A2

# FIG. 6

# FIG. 7

**ORIGINAL DENSITY (DENSE)**

| INPUT/OUTPUT-DENSITY CONVERTING PORTION | | LUMINANCE-DENSITY CONVERTING PORTION |

**OUTPUT DENSITY**
(DENSE)

**ORIGINAL LUMINANCE**
(LIGHT)

OUTSIDE LIGHT
500-1500 LUX

ORIGINAL SURFACE ILLUMINANCE A

2000 LUX

OUTSIDE LIGHT
500-1500 LUX

ORIGINAL SURFACE ILLUMINANCE B

10000 LUX

BLACK REPRODUCTION REGION

MEDIUM TONE REPRODUCTION REGION

WHITE REPRODUCTION REGION

EP 1 150 487 A2

# FIG. 8

ORIGINAL DENSITY (DENSE)

| INPUT/OUTPUT-DENSITY CONVERTING PORTION | LUMINANCE-DENSITY CONVERTING PORTION |

OUTPUT DENSITY

(DENSE)

ORIGINAL LUMINANCE

(LIGHT)

OUTSIDE LIGHT 500-1500 LUX

ORIGINAL SURFACE ILLUMINANCE

1000 LUX

BLACK REPRODUCTION REGION

WHITE REPRODUCTION REGION

MEDIUM TONE REPRODUCTION REGION

EP 1 150 487 A2